# EUROPEAN PATENT APPLICATION

(11) **EP 3 278 674 A1**
(43) Date of publication of application: **07.02.2018**
(21) Application number: 16182578.1
(22) Date of filing: 03.08.2016
(51) Int. Cl.: A23K 20/28

(54) **USE OF AN ADSORBENT FOR REMOVAL OF DEOXYNIVALENOL FROM ANIMAL FEED**

(71) Applicant: Clariant International Ltd, 4132 Muttenz (CH)
(72) Inventor: WIMMER, Larissa, 84109 Wörth (DE); SOHLING, Ulrich, 85356 Freising (DE); RUF, Friedrich, 84184 Tiefenbach (DE)
(74) Representative: Graser, Konstanze

(57) **Abstract**

The invention relates to the use of an adsorbent for removal of deoxynivalenol, to said adsorbent, to a method for adsorption of deoxynivalenol from animal feed and to an animal feed comprising said adsorbent. The said adsorbent comprises at least one synthetic Y zeolite and shows a high binding capability towards deoxynivalenol in a specific way. Moreover, further mycotoxin adsorbents may be contained in the adsorbent

## Description

The invention relates to the use of an adsorbent for removing deoxynivalenol, to said adsorbent, to a method for adsorption of deoxynivalenol from animal feed and to an animal feed comprising said adsorbent.

Microorganisms, like fungi or bacteria, produce toxins that may be harmful to the health of humans as well as of animals.

Mycotoxins are toxic metabolites resulting from fungal infestation and growth on cereal grains and can result during growth, harvest, transportation or storage of the grains. They have a health hazardous effect on agricultural animals fed with infected grain but may secondarily also effect humans via the food chain. Mycotoxin contamination of cereal grains is a function of mold types, growing conditions during the crop season and storage practices.

Some of the most important mycotoxins for the feed industry are:
Aflatoxin B1, B2, G1 and G2, which are formed by various *Aspergillus species.*

Ochratoxin, which is formed by *Aspergillus ochraceus* and *Penicillium viridicatum.*

Zearalenone, which is formed by *Fusarium graminearum,* which grows on corn, barley and wheat.

Fumonisine, which is formed by fungi of the genus *Fusarium.*

T2 toxins and T2-like toxins (tricothecenes), which are formed by fungi of the genus *Fusarium.*

The presence of mycotoxins in the animal feed has an impact on animals. The mortality of the animals increases. In many cases, the economic effects due to reduced productivity of the animals, increased occurrence of disease because of immune suppression, damage to vital organs and an adverse effect on reproduction are even greater than the effects caused by death of the animals by mycotoxin intoxication.

In the state of the art various methods for removing mycotoxins from feed, e.g. adsorption of mycotoxins, are described.

US 2004/0028678 A1 discloses the use of an acid-activated layer silicate for adsorption of mycotoxins. The layer silicate is activated with less than 10 % wt, referred to absolutely dry layer silicate, of an acid at a temperature below 80°C.

WO 2011/023391 A1 describes an adsorbent comprising a clay material and activated carbon which adsorbs a variety of toxins, in particular different types of mycotoxins. The clay material is selected from the group of any natural, synthetic or modified clay, preferably phyllosilicates.

A type of T2-toxins is deoxynivalenol (also named vomitoxin) which is formed by fungi of the genus *Fusarium.* As described for the mycotoxins in general, the presence of deoxynivalenol in animal feed has also impact on animals. The animals react with reduced growth, feed refusal, increased mortality and reproduction disorders.

The removing of deoxynivalenol is already described in the state of the art wherein different concepts for the removal thereof are applied.

AT 512259 B1 discloses an additive to animal feed for decontamination comprising alkaline metal or alkaline earth metal sulfite, a solid support material and others. The additive reduces the concentration of deoxynivalenol containing in the feed through chemical detoxification whereby the non-toxic metabolic deoxynivalenol sulfonate is formed. If the support material comprising in the additive is selected from the group of zeolite the products of the reaction are adsorbed by the zeolite.

WO 96/12414 A1 describes a feed additive which deactivates mycotoxins including deoxynivalenol. The additive comprises a compound producing enzymes in the feed and/or in the digestive tract of the animals and a natural or synthetic porous materials including zeolite. The said additive deactivates the mycotoxins in the feed enzymatically whereby the mycotoxins being accessible for enzymatic degradation are directly degraded. The presence of natural or synthetic porous materials adsorb mycotoxins being not accessible for the direct enzymatic degradation on their surface and provide them also to the enzymatic degradation.

In DD 275390 A1 a preserving agent is described which decreases the growth of mold types and the formation of mycotoxins in feedstuff during the storage. The preserving agent comprises zeolitic molecular sieve of types X, Y or A or phyllosilicates of type Na-Magadiit where antimicrobial and/or microbicide agents are adsorbed on their surface.

In DE 29808635 U1 the adsorption of toxic substances, preferably of mycotoxins, by natural and/or synthetic zeolites or zeolite minerals is disclosed. The used natural zeolite or zeolite materials are submitted to a thermic pre-treatment between a temperature of 60°C and 250°C where the framework is modified. The preferred natural zeolite or zeolite materials is a natural zeolite stone containing minerals from the group of heulandite of which the adsorption performance is shown by the removal of aflatoxins.

The binding agents of the state of the art are not able to efficiently detoxify deoxynivalenol. Mostly they remove not only mycotoxins, particularly deoxynivalenol, but also further components being present in the animal feed in an unspecific way. Their effect of the removal of deoxynivalenol from animal feed is low. Moreover, the use of the additives requires technical complicated embodiments.

It is required that the binding agents do not bind in an unspecific way all types of small molecules present in the animal feed, such as vitamins, amino acids, antibiotics, being necessary for health and growth of the animals. Furthermore, the binding agents should prevent that the toxic components get into the bloodstream of the animals and have an impact on the immune system, reproduction, feed intake and growth of the animals.

Therefore, object of the present invention is to provide an adsorbent which avoids the disadvantages of the prior art and removes deoxynivalenol from animal feed in a specific way and independent from the concentration of deoxynivalenol contained in the feed. The adsorbent should further exhibit stable fixation of deoxynivalenol under physiological conditions, i.e. show little desorption of the bound deoxynivalenol.

Further objects of the present invention are to provide an adsorbent for the removal of deoxynivalenol and further mycotoxins, a method for adsorption of deoxynivalenol from animal feed and an animal feed containing the said adsorbent.

The problem is solved by the use of an adsorbent according to the independent claim 1. Preferred embodiments of the invention are defined in the claims dependent on claim 1.

It was surprisingly found that an adsorbent comprising at least one synthetic zeolite having faujasite framework (FAU), in particular at least one synthetic Y zeolite, has high binding capabilities towards deoxynivalenol and adsorb deoxynivalenol in a specific way. The adsorbent is able to adsorb deoxynivalenol in high quantity under physiological conditions such as in the digestive tract of the animal. The adsorbent is non-toxic to the animal and will pass the digestive tract unchanged while deoxynivalenol is firmly bound to it.

Zeolites are built by SiO₄-Tetrahedrons and AlO₄-Tetrahedrons which are connected by oxygen bridges whereby a three dimensional framework with cages and channels is formed. Zeolites are divided in different framework types based on their crystalline structure. The faujasite framework (FAU) is a well-known zeolite structure and its structural and physical parameters can be seen from many references, such as "database of zeolite structures, http://iza-structure.org/databases/".

In US 3,130,007 synthetic Y zeolite is described as a synthetic, crystalline zeolitic sodium aluminosilicate of the molecular sieve type. Also, a process of its preparation is disclosed therein.

According to an embodiment, the adsorbent comprises at least one synthetic Y zeolite showing the typical cages and hexagonal prism of the faujasite framework (FAU). The at least one synthetic Y zeolite according to the invention adsorbs deoxynivalenol in a specific way.

It is understood that the adsorbent according to a specific embodiment of the invention may simultaneously contain different synthetic Y zeolites having faujasite framework (FAU).

The quality of the adsorbent, such as the capacity for adsorbing deoxynivalenol and the strength for binding deoxynivalenol to the adsorbent under physiological conditions, may be modified by carefully selecting the type of synthetic Y zeolite.

Surprisingly, it has been found that the content of aluminum of the preferred synthetic Y zeolites in the adsorbent according to the invention influences the performance in adsorption of deoxynivalenol. In the experiments it could be shown that the synthetic Y zeolites according to the invention which have a high ratio of SiO₂ to Al₂O₃ are able to adsorb deoxynivalenol more efficiently. The lower the content of aluminum of the synthetic Y zeolites is the better the adsorption capability of the synthetic Y zeolites is towards deoxynivalenol.

The content of silicon and of aluminum are calculated as Al₂O₃ and SiO₂ respectively. The method for the calculation is described below under examples.

According to an embodiment of the invention the molar ratio of SiO₂ to Al₂O₃ of the synthetic Y zeolites are more than 20, preferably about 25 to 90.

The synthetic Y zeolites in the adsorbent according to the invention show a surface area between 500 m²/g and 850 m²/g, preferably between 600 m²/g and 800 m²/g as determined by the BET-method. The used method for determination is described below under examples. The adsorbent according to the invention shows a high binding capability towards deoxynivalenol. It has been found that their adsorption performance is very high. In the experiments it is shown that their binding capability towards the present deoxynivalenol is independent on the amount of deoxynivalenol present in the test samples. The adsorbent according to the invention is herewith more effective than adsorbent materials known from the state of the art.

In one embodiment of the invention the adsorbent is used in such a way that it may be added to the animal feed.

In one further embodiment of the invention the adsorbent is admixed to the animal feed prior to feeding.

The adsorbent according to the invention may be administered in any adequate form.

One embodiment of the invention is that the additive is administered in the form of a powder. However, the adsorbent may also take any other form, and may be e.g. provided in granular form or as agglomerate.

In one embodiment of the invention the adsorbent contains synthetic Y zeolite as a single component. It is understood that single component means in the scope of the invention that at least one synthetic Y zeolite or any mixtures thereof may be comprised in the adsorbent.

An alternative embodiment of the invention is the use of the adsorbent described above in combination with any further adsorbents or any mixtures of adsorbents which are able to bind any further components in the feed, in particular to adsorb mycotoxins like aflatoxin, ochratoxin, zearalenone, fumonisine,T2 toxins and T2-like toxins or any mixtures with each other.

The at least one further adsorbent or any mixtures of further adsorbents contained in the adsorbent according to the invention for removal of mycotoxins are selected from any additional mycotoxin adsorbents, including but not limited to smectite group, bentonite, saponite, sepiolite, attalpulgite, activated carbon, silicic acid or any mixtures with each other.

In an embodiment of the invention the addition of the adsorbent described above and of any further mycotoxin adsorbent to the animal feed may occur simultaneously or in any order.

In an alternative embodiment the use of the adsorbent described above may be a preventive measure in order to prevent the contamination of the animal feed with deoxynivalenol and/ or any further mycotoxin.

A further object of the invention is directed to the adsorbent containing at least one synthetic Y zeolite and at least one further additional mycotoxin adsorbent.

According to an embodiment, the adsorbent according to the invention essentially comprises at least one synthetic Y zeolite and at least one further additional mycotoxin adsorbent.

Also here, the adsorbent according to the invention containing a combination of at least one synthetic Y zeolite and at least one further additional mycotoxin adsorbent may be administered in any adequate form.

The adsorbent according to the invention has a high activity towards adsorption of deoxynivalenol and if the adsorbent comprises at least one further component or any mixtures of components which are able to adsorb any further toxic components also a high adsorption capability towards other mycotoxins such as e.g. aflatoxin, ochratoxin, zearalenone, fumonisine,T2 toxins and T2-like toxins or any mixtures with each other. In this case, it is provided one adsorbent which is able to adsorb deoxynivalenol efficiently and in a specific way and to adsorb further mycotoxins as well.

A further object of the invention is the method for adsorption of deoxynivalenol from animal feed comprising
a) providing an adsorbent as described above
b) admixing the adsorbent of step a) to animal feed.

An alternative embodiment of the invention is the method for adsorption of deoxynivalenol and any further toxic components such as e.g. aflatoxin, ochratoxin, zearalenone, fumonisine,T2 toxins and T2-like toxins or any mixtures with each other from animal feed.

A further embodiment of the invention is that the admixing of the adsorbent to the animal feed occurs prior to feeding.

According to an embodiment, it is sufficient that the adsorbent according to the invention is admixed to the animal feed in an amount that the concentration of synthetic Y zeolite or mixtures thereof is less than 10,0 % by weight of the animal feed.

A further object of the present invention is an animal feed comprising the adsorbent as described above.

The animal feed may be every feed material commonly used in animal breeding and may be preferably plant material, such as cereals, corns or grains.

The mycotoxins comprised in the feedstuff may be deoxynivalenol as single toxic component or any combination of deoxynivalenol with other mycotoxins such as e.g. aflatoxin, ochratoxin, zearalenone, fumonisine,T2 toxins and T2-like toxins or any mixtures with each other. Moreover, precursors of deoxynivalenol and/or of further mycotoxins and/or the respective mold types may be present in the animal feed.

According to an embodiment, it is sufficient that the amount of the adsorbent according to the invention in the animal feed is selected that the at least one synthetic Y zeolite is provided in an amount less than 10,0 % by weight of animal feed.

The invention will be explained in none-restrictive manner by means of the following examples.

### Examples

### 1. Determination methods of physical features used to characterize the synthetic Y zeolites

### Specific surface

The specific surface has been determined with a fully automated nitrogen porosimeter of Micromeritics GmbH, Mönchengladbach, Germany, type ASAP 2010.

The sample is cooled in high vacuum to the temperature of liquid nitrogen. Then, nitrogen is continuously dosed into the sample chamber. By determination of the adsorbed amount of gas as a function of pressure, an adsorption isotherm is obtained at constant temperature. After pressure compensation the gas is removed step-by-step and a desorption isotherm is determined.

The specific surface is determined according to the BET method (one-point method with nitrogen according to DIN 66131).

### Standard buffered solutions of deoxynivalenol

For the adsorption step citric acid is dissolved in deionized water receiving 0.1 N solution and adjusted to pH 3.0 with 0.2N NaOH. A defined volume of the deoxynivalenol stock solution having 100 µg/mL deoxynivalenol in methanol is taken out of the round-bottom flask and transferred into a defined volume of 0.1 N citric acid at pH 3.0. The volumes of the stock solution and citrate buffer are determined by calculation: c1*V1 = c2*V2. The intended concentration of deoxynivalenol in the standard buffered solution of deoxynivalenol was 2.0 µg/mL and 1.5 µg/mL.

### Al₂O₃-Content/SiO₂-Content

For the determination of the Al₂O₃-content the zeolite material was totally disintegrated in HF and HCl. After dissolution of the solids the solution is filled up with HCl and deionized water. The content of Al is determined with ICP-OES. The Al-value is converted into Al₂O₃.

The pre-dried zeolite material is mixed with sodium carbonate and melted in an annealing furnace for 3 hours. The cooled down, melted mass is mixed with HCl. After the CO₂ formation is finished the solution is evaporated until dryness. This step is repeated two times. After this procedure the residue is humidified with HCl, mixed with distilled water and heated. The insoluble SiO₂ is separated from the solution by filtration and washed with hot hydrochloric acid (10%) three times. Subsequently, it is washed with hot distilled water until the filtrate is chloride free.

The SiO₂ is incinerated together with the filter paper at a temperature of 1000°C and the SiO₂-residue is weighed.

### 2. General procedure for determination of deoxynivalenol adsorption

For mycotoxin adsorption and desorption test procedure, the adsorbent is mixed with the deoxynivalenol buffered solution for 1 hour at a temperature of 37°C and at 750 rpm; after centrifugation, a sample of the supernatant is taken and the remaining concentration is determined by HPLC.

A series of experiments were performed according to the above described general procedure.

The adsorbents summarized in table 1 were used in the examples:

**Table 1: Adsorbents used in the examples**

| Adsorbent | Product Name | Composition | Property data | |
|---|---|---|---|---|
| | | | Ratio SiO₂:Al₂O₃ | Specific Surface [m²/g] |
| Adsorbent 1 | Zeolyst CBV 780 | Synthetic Y Zeolite 1 | 80 | 780 |
| Adsorbent 2 | Zeolyst CBV 720 | Synthetic Y Zeolite 2 | 30 | 780 |
| Adsorbent 3 | Zeoflair 200 | Synthetic Y Zeolite 3 | 49 | 650 |
| Adsorbent 4 | Upador 2000 | Synthetic Y Zeolite 4 | 55 | 693 |
| Adsorbent 5 | Zeolyst CBV 400 | Synthetic Y Zeolite 5 | 5,1 | 730 |
| Adsorbent 6 | Toxisorb^{®} DA | Clay based material containing 2,5% active carbon | | |

The adsorbents 1 to 4 in table 1 are adsorbents according to the invention. Adsorbent 5 is also a synthetic Y zeolite and adsorbent 6 is a material of the state of the art.

The binding capability of the adsorbents 1 to 6 towards deoxynivalenol was tested. The experiments were performed in the buffered standard solution where two different concentration of deoxynivalenol 1500 ppb and 2000 ppb were present. The amount of the adsorbents 1 to 6 was 0,4% by weight.

**Table 2: Adsorption of deoxynivalenol with an amount of 0,4% by weight of different adsorbents**

| Adsorbents | Adsorption % |
|---|---|
| 2000 ppb deoxynivalenol Amount of adsorbent: 0,4% by weight | |
| Adsorbent 1 | 87 |
| Adsorbent 2 | 82 |
| Adsorbent 3 | 94 |
| Adsorbent 4 | 92 |
| Adsorbent 5 | 3 |
| Adsorbent 6 | 60 |
| 1500 ppb deoxynivalenol Amount of adsorbent: 0,4% by weight | |
| Adsorbent 1 | 85 |
| Adsorbent 2 | n.d. |
| Adsorbent 3 | 95 |
| Adsorbent 4 | 94 |
| Adsorbent 5 | n.d |
| Adsorbent 6 | 73 |

The adsorbents 1 to 4 according to the invention show a high adsorption capability towards deoxynivalenol. In contrary, adsorbent 5 has low binding performance towards deoxynivalenol. As understood from table 1 adsorbent 5 is also a synthetic Y zeolite but has the lowest ratio of SiO₂:Al₂O₃ under the synthetic Y zeolites tested in the experiments.

The binding capability of adsorbent 6 towards deoxynivalenol is also lower than the one of the adsorbents according to the invention.

It is shown that the adsorbents 1 to 4 according to the invention show a higher performance of adsorption of deoxynivalenol as the material of the state of art and that their adsorption performance is independent from the concentration of deoxynivalenol.

**Table 3: Adsorption of deoxynivalenol with an amount of 0,1% by weight of different adsorbents**

| Adsorbents | Adsorption % |
|---|---|
| 2000 ppb deoxynivalenol Amount of adsorbents: 0,1% by weight | |
| Adsorbent 1 | 54 |
| Adsorbent 3 | 78 |
| Adsorbent 4 | 74 |
| Adsorbent 6 | 20 |
| 1500 ppb deoxynivalenol Amount of adsorbents: 0,1% by weight | |
| Adsorbent 1 | 55 |
| Adsorbent 3 | 80 |
| Adsorbent 4 | 76 |
| Adsorbent 6 | 22 |

The adsorbents 1, 3 and 4 according to the invention show also a good adsorption activity towards deoxynivalenol if they are added in small amounts. In contrary, the adsorption performance of adsorbent 6 of the state the art strongly decreases.

Also the binding capability of the adsorbent according to the invention present in a mixture with the further mycotoxin adsorbent TOXISORB^{®} Premium was tested.

The experiments were performed in a buffered citrate solution at pH 3.0 which contains 500 ppb deoxynivalenol. Mixtures of TOXISORB^{®} Premium and of 12,5/25% by weight of the adsorbents 3 or 4 were prepared. The mixtures 1 to 4 were admixed to the buffered solution in an amount of 0,4% by weight. The solution was stirred at a temperature of 37°C for 1 hour. The suspensions were then centrifuged and a sample of the supernatant was analyzed by means of HPLC analysis for the residual of content of non-adsorbed mycotoxins.

**Table 4: Adsorption of deoxynivalenol with different mixtures of TOXISORB^{®} Premium and of different adsorbents**

| Mixtures | Composition | Adsorption % |
|---|---|---|
| 2000 ppb deoxynivalenol Amount of mixture: 0,4 % by weight | | |
| Mixture 1 | TOXISORB^{®} Premium + 25 % Adsorbent 4 | 63 |
| Mixture 2 | TOXISORB^{®} Premium + 12,5 % Adsorbent 4 | 50 |
| Mixture 3 | TOXISORB^{®} Premium + 25 % Adsorbent 3 | 73 |
| Mixture 4 | TOXISORB^{®} Premium + 12,5 % Adsorbent 3 | 58 |

As can be seen in context with table 2 and 3 the adsorbents 3 and 4 according to the invention remain their adsorption capability towards deoxynivalenol even if there are mixed with other mycotoxin adsorbents. The decreased rate of adsorption of deoxynivalenol is based on the effect of dilution of the adsorbents 3 and 4 as well through mixing with TOXISORB^{®} Premium.

### 3. Commercial Examples

### 3.1. Adsorption of deoxynivalenol with samples of commercial products

The binding capability of different commercial products was measured. The experiments were performed in the standard buffered solution which contains deoxynivalenol in an amount of 2000 ppb.

**Table 5: Adsorption of deoxynivalenol with different commercial products**

| Commercial Product | Detoxification mechanism | Adsorption % |
|---|---|---|
| 2000 ppb deoxynivalenol Amount of commercial product: 0,4 % by weight | | |
| MYCO-AD A-Z^{®} | Adsorption | 0 |
| Neovia TX-5 | Adsorption | 0 |
| Mycosorb^{®} | Adsorption | 0 |
| Mycofix^{®} Plus | Biotransformation | 0 |
| Toxfin | Adsorption | 0 |

The tested commercial products do not show any adsorption capability towards deoxynivalenol under the applied conditions during the experiments.

### 3.2. Adsorption capability of Clinoptilolite

Clinoptilolite is a natural zeolite having the heulandite framework (HEU), see "database of zeolite structures, http://iza-structure.org/databases/". The structure of the heulandite framework (HEU) completely differences from the faujasite structure (FAU).

The experiments were performed in citrate buffered solution at pH 3.0 which contains deoxynivalenol in an amount of 2000 ppb. Clinoptilolite is admixed to the buffered solution in an amount of 0,1/0,2 % by weight. The solution was stirred at a temperature of 37°C for 1 hour.

The suspensions were then centrifuged and a sample of the supernatant was analyzed by means of HPLC analysis for the residual of content of non-adsorbed mycotoxins.

**Table 6: Adsorption of deoxynivalenol with clinoptilolite**

| Adsorbent | Adsorption % |
|---|---|
| 2000 ppb deoxynivalenol | |
| Clinoptilolite 0,1% by weight | <1 |
| Clinoptilolite 0,2% by weight | <1 |

As can be seen from table 6 clinoptilolite does not show any adsorption capability towards deoxynivalenol.

## Claims

1. Use of an adsorbent containing one or more synthetic Y zeolites for adsorption of deoxynivalenol.

2. Use of an adsorbent according to claim 1 **characterized in that** the adsorbent is added to animal feed.

3. Use of an adsorbent according to claim 1 or 2 **characterized in that** the adsorbent is added to animal feed prior to feeding.

4. Use of an adsorbent according to any one of claims 1 to 3 **characterized in that** the adsorbent contains at least one further mycotoxin adsorbent.

5. Use of an adsorbent according to claim 4 **characterized in that** the at least one further mycotoxin adsorbent is selected from the smectite group, activated carbon or silicic acid or mixtures thereof.

6. Use of an adsorbent according to claim 4 or 5 **characterized in that** the at least one further mycotoxin adsorbent is bentonite, saponite, sepiolite or attalpulgite or a mixture thereof.

7. Adsorbent containing at least one synthetic Y zeolite for adsorption of deoxynivalenol and at least one further mycotoxin adsorbent as defined in any of the claims 5 to 6.

8. Method for adsorption of deoxynivalenol from animal feed comprising
a) providing an adsorbent according to claim 7,
b) admixing the adsorbent of step a) to animal feed.

9. Method according to claim 8 **characterized in that** the adsorbent according to claims 7 is admixed to the animal feed prior to feeding.

10. Method according to claim 8 or 9 **characterized in that** the adsorbent is admixed to the animal feed in an amount so that the concentration of the one or more synthetic Y zeolites is less than 10% by weight of animal feed.

11. Animal feed comprising the adsorbent according to claim 7.

12. Animal feed according to claim 11 **characterized in that** the amount of the adsorbent in the animal feed is selected so that the one or more synthetic Y zeolites is provided in an amount less than 10 % by weight of animal feed.

13. Animal feed according to claim 10 or 11 **characterized in that** the animal feed is based on plant material comprising deoxynivalenol.
